# EUROPÄISCHE PATENTSCHRIFT

(11) **EP 1 854 818 B1**
(45) Veröffentlichungstag und Bekanntmachung des Hinweises auf die Patenterteilung: **01.07.2009**
(21) Anmeldenummer: 07008473.6
(22) Anmeldetag: 26.04.2007
(51) Int. Cl.: C08G 18/32, C08G 18/66, C08G 18/73

(54) **Aliphatische, sinterfähige, thermoplastische Polyurethanformmassen mit verbessertem Ausblühverhalten**
Aliphatic, sinterable, thermoplastic polyurethane moulded parts with reduced efflorescence
Compositions à mouler thermoplastiques frittables à efflorescence réduite contenant un polyuréthane aliphatique

(30) Priorität: 09.05.2006 DE 102006021734
(43) Veröffentlichungstag der Anmeldung: 14.11.2007
(73) Patentinhaber: Bayer MaterialScience AG, 51368 Leverkusen (DE)
(72) Erfinder: Peerlings, Henricus, Dr., 42699 Solingen (DE); Kaufhold, Wolfgang, Dr., 51061 Köln (DE); Nefzger, Hartmut, Dr., 50259 Pulheim (DE); Bauer, Erika, 41363 Jüchen (DE); Broich, Markus, 41836 Hückelhoven (DE)

(56) Entgegenhaltungen:
- EP-A- 1 245 639
- EP-A- 1 674 494
- WO-A-20/05089778
- DE-A1- 10 206 839

## Beschreibung

Die vorliegende Erfindung betrifft aliphatische, lichtstabile, sinterfähige, thermoplastische Polyurethanformmassen mit verbessertem Ausblühverhalten, guter thermischer Beständigkeit und guter technischer Verarbeitbarkeit.

Thermoplastische Polyurethane (TPU) sind wegen ihrer guten Elastomereigenschaften und thermoplastischen Verarbeitbarkeit von großer technischer Bedeutung. Eine Übersicht über die Herstellung, Eigenschaften und Anwendungen von TPU ist z.B. im Kunststoff Handbuch [G. Becker, D. Braun], Band 7 "Polyurethane", München, Wien, Carl Hanser Verlag, 1983 gegeben.

TPU werden zumeist aus linearen Polyolen (Makrodiolen), wie Polyester-, Polyether- oder Polycarbonatdiolen, organischen Diisocyanaten und kurzkettigen, zumeist difunktionellen Alkoholen (Kettenverlängerern) aufgebaut. Sie können kontinuierlich oder diskontinuierlich hergestellt werden. Die bekanntesten Herstellverfahren sind das Bandverfahren (GB-A 1 057 018) und das Extruderverfahren (DE-A 19 64 834).

Der Aufbau der thermoplastisch verarbeitbaren Polyurethanelastomere kann entweder schrittweise (Prepolymerdosierverfahren) oder durch die gleichzeitige Reaktion aller Komponenten in einer Stufe (one-shot-Dosierverfahren) erfolgen.

Bei der Herstellung von aliphatischem thermoplastischem Polyurethan auf Basis 1,6-Hexamethylendiisocyanat (HDI) werden zyklische Oligourethane gebildet, welche durch ihr spezifisches Kristallisationsverhalten weniger verträglich mit der Polymermatrix sind und daher zu der Bildung eines kreidenden störenden Oberflächenbelags führen. Dieses Phänomen wird z.B. in DE-A-102 06 839 beschrieben. Es hat sich gezeigt, dass Test-Lagerungen bei Raumtemperatur (100 Tage) oder 28 Tage bei 60°C in einer mit Wasserdampf gesättigten Umgebung keine ausreichende Aussage über das Langzeitverhalten geben. Aus diesem Grund werden zusätzlich beschleunigte Wasserlagerungstests durchgeführt, um das Ausblühverhalten über eine längere Zeitskala besser abschätzen zu können.

Prinzipiell kann die Konsistenz und damit auch das Ausblühverhalten der Cyclo-Oligourethane geändert werden, indem man entweder das Diisocyanat ändert und/oder den Kettenverlängerer anpasst. Aufgrund der guten Wärmestabilität, der mechanischen Eigenschaften und des guten Verfestigungsverhaltens ist HDI allerdings als Diisocyanatkomponente besonders gut für die Herstellung von TPU-Teilen im Automobilinnenraum (z.B. als Instrumententafel- oder andere Oberfläche) geeignet, so dass eine Änderung des Diisocyanates kaum in Betracht kommt. Hingegen wurden die Kettenverlängerer im Hinblick auf die vorgenannten Anforderungen angepasst.

In DE-A 100 50 495 wird der Einsatz von 1,6-Hexandiol, 1,5-Pentandiol, 1,4-Cyclohexandiol, 1,4-Bis(Hydroxymethyl)cyclohexan und von Bis-(hydroxyethyl)-hydrochinon zur Verbesserung des Ausblühverhaltens beschrieben.

In EP-A-1 245 639 werden unter anderem Diester der Terephthalsäure mit Glykolen mit 2 bis 4 Kohlenstoffatomen als Kettenverlängerungsmittel offenbart.

In DE-A 100 37 622 wird der Einsatz von Ethylenglykol, 1,4-Bis-(hydroxymethyl)-benzol, 1,4-Bis-(hydroxyethyl)-benzol und 1,4-Bis-(2-hydroxyethoxy)-benzol zur Vermeidung von Belagsbildung beschrieben.

Die vorgenannten TPU zeigen allerdings nach einem längeren Zeitraum ein unerwünschtes Ausblühverhalten, das insbesondere bei der Verwendung der TPU im Automobilinnenraum unerwünscht ist.

Aufgabe war es daher, thermoplastische sinterfähige, lichtstabile Polyurethanformmassen (TPU) zur Verfügung zu stellen, die auch nach einem langen Zeitraum (getestet durch einen beschleunigten Wasserlagerungstest) kein Ausblühverhalten zeigen und keinen Belag aufweisen und weiterhin eine gute thermische Stabilität, angenehme Haptik und gute technische Verarbeitbarkeit aufweisen.

Diese Aufgabe konnte durch den Einsatz spezieller oligomerer Kettenverlängerer, auch in Abmischung mit anderen Kettenverlängerern gelöst werden.

Gegenstand der vorliegenden Erfindung sind daher lichtstabile, sinterfähige, thermoplastische Polyurethane erhältlich aus
a) einer Isocyanatkomponente bestehend aus
   a1) 100 bis 70 Mol-% 1,6-Hexamethylendiisocyanat und
   a2) 0 bis 30 Mol-% eines aliphatischen Diisocyanates oder Gemische von aliphatischen und/oder cycloaliphatischen Diisocyanaten, ausgenommen 1,6-Hexamethylendiisocyanat
b) einer Kettenverlängerungskomponente bestehend aus
   b1) 100 bis 40 Mol-% mindestens eines Kettenverlängerers mit einem zahlenmittleren Molekulargewicht zwischen 104 und 500 g/mol aus der Gruppe bestehend aus Verbindungen der Formeln (I) und (II) 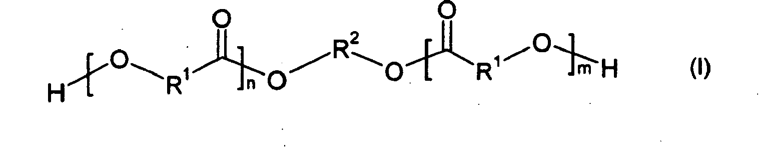 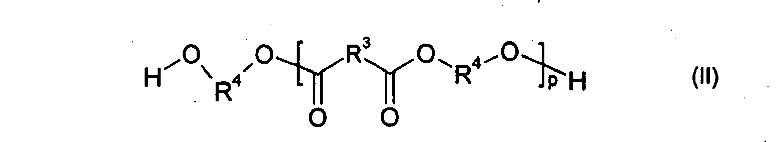 mit
      - R¹: verzweigte oder unverzweigte Alkylenreste mit 1 bis 12 C-Atomen oder substituierte oder nicht-substituierte Alkarylenreste mit 6 bis 24 C-Atomen,
      - R², R⁴: verzweigte oder unverzweigte Alkylenreste oder Alkoxyalkylenreste mit 1 bis 12 C-Atomen oder substituierte oder nicht-substituierte Alkarylenreste oder substituierte oder nicht substituierte Alkoxyarylenreste mit 6 bis 24 C-Atomen,
      - R³: verzweigte oder unverzweigte Alkylenreste mit 1 bis 8 C-Atomen,
      - n, m: 0 bis 10, wobei n + m ≥ 1, und
      - p: 1 bis 10,
   b2) 0 bis 60 Mol-% eines Kettenverlängerers oder eines Gemisches aus Kettenverlängerern mit einem zahlenmittleren Molekulargewicht von 60 bis 400 g/mol, wobei der Kettenverlängerer b2) nicht identisch mit dem Kettenverlängerer b1) ist, und
c) mindestens einer Polyolkomponente, bevorzugt aus der Gruppe der Polyether und/oder Polyester und/oder Polycarbonatdiole, mit einem zahlenmittleren Molekulargewicht von 600 bis 6000 g/mol,
   in Gegenwart von
d) gegebenenfalls Katalysatoren,
   unter Zusatz von
e) 0,1 bis 5 Gew.-%, bezogen auf thermoplastisches Polyurethan an Licht-Stabilisatoren,
f) gegebenenfalls weiteren Zusatzmitteln und/oder Hilfsstoffen und
g) gegebenenfalls Kettenabbrechern,
wobei das Verhältnis der Isocyanatgruppen aus a) zu den gegenüber Isocyanat reaktiven Gruppen aus b) und c) und g) 0,9:1 bis 1,1:1 beträgt.

Als organische Diisocyanate a2) können folgende aliphatische und/oder cycloaliphatische Diisocyanate zum Einsatz kommen: Ethylendiisocyanat, 1,4-Tetramethylendiisocyant, 1,12-Dodecandiisocyanat; cycloaliphatische Diisocyanate wie Isophorondiisocyanat, 1,4-Cyclohexandiisocyanat, 1-Methyl-2,4-cydohexandiisocyanat und 1-Methyl-2,6-cydohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische. Vorzugsweise verwendet werden 1,4-Cyclohexandiisocyanat, Isophorondiisocyanat und Dicyclohexylmethandiisocyanat. Die genannten Diisocyanate können einzeln oder in Form von Mischungen untereinander zur Anwendung kommen. Sie können auch zusammen mit bis zu 15 mol-% (berechnet auf Gesamt-Diisocyanat) eines Polyisocyanates verwendet werden, es darf aber höchstens soviel Polyisocyanat zugesetzt werden, dass ein noch thermoplastisch verarbeitbares Produkt entsteht.

Kettenverlängerungsmittel b2) besitzen im Mittel 1,8 bis 3,0 zerewitinoffaktive Wasserstoffatome und haben ein Molekulargewicht von 60 bis 400. Die Mittel können neben Hydroxylgruppen auch Aminogruppen, Thiolgruppen oder Carboxylgruppen aufweisen, bevorzugt zwei bis drei, besonders bevorzugt zwei Hydroxylgruppen.

Als Kettenverlängerer b2) wird vorzugsweise eine oder mehrere Verbindungen genommen, die nicht dem Kettenverlängerer b1) entspricht, bevorzugt aus der Gruppe der aliphatischen Diole mit 2 bis 14 Kohlenstoffatomen, wie z.B. Ethandiol, 1,2-Propandiol, 1,3-Propandiol, 1,4-Butandiol, 2,3-Butandiol, 1,5-Pentandiol, 1,6-Hexandiol, Diethylenglykol und Dipropylenglykol, 1,4-Cyclohexandiol, 1,4-Dimethanolcyclohexan und Neopentylglykol. Geeignet sind jedoch auch Hydroxyalkylenether des Hydrochinons, z.B. 1,4-Di(β-hydroxyethyl)-hydrochinon, ethoxylierte Bisphenole, z.B. 1,4-Di(β-hydroxyethyl)-bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4-toluylendiamin oder 3,5-Diethyl-2,6-toluylendiamin oder primäre mono-, di-, tri- oder tetraalkylsubstituierte 4,4'-Diaminodiphenylmethane. Besonders bevorzugt werden als Kettenverlängerer Ethandiol, 1,4-Butandiol, 1,6-Hexandiol, 1,4-Di(β-hydroxyethyl)-hydrochinon oder 1,4-Di(β-hydroxyethyl)-bisphenol A verwendet. Daneben können auch kleinere Mengen an Triolen zugesetzt werden.

Als Polyolkomponente c) werden vorzugsweise solche mit im Mittel mindestens 1,8 bis höchstens 3,0 zerewitinoff-aktiven Wasserstoffatomen und einem zahlenmittleren Molekulargewicht M̅ₙ von 600 bis 6000 eingesetzt. Eingeschlossen sind neben Hydroxylgruppen Aminogruppen, Thiolgruppen oder Carboxylgruppen aufweisenden Verbindungen, insbesondere zwei bis drei, bevorzugt zwei Hydroxylgruppen aufweisende Verbindungen, speziell solche mit zahlenmittleren Molekulargewichten M̅ₙ von 600 bis 4500. Produktionsbedingt enthalten diese oft kleine Mengen an nichtlinearen Verbindungen. Häufig spricht man daher auch von "im wesentlichen linearen Polyolen". Bevorzugt sind Polyester-, Polyether-, Polycarbonat-Diole oder Gemische aus diesen.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans. Es können auch trifunktionelle Polyether in Anteilen von 0 bis 30 Gew.-% bezogen auf die bifunktionellen Polyether eingesetzt werden, jedoch höchstens in solcher Menge, dass ein noch thermoplastisch verarbeitbares Produkt entsteht. Die im wesentlichen linearen Polyether-Diole besitzen vorzugsweise zahlenmittlere Molekulargewichte M̅ₙ von 600 bis 6000. Sie können sowohl einzeln als auch in Form von Mischungen untereinander zur Anwendung kommen. Die aus Epoxiden hergestellten Polyetherdiole können sowohl nach dem Doppelmetallcyanid-Verfahren als auch nach dem KOH katalysierten Verfahren hergestellt werden.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z.B. Ethylenglykol, Diethylenglykol, 1,4-Butandiol, 1,5-Pentandiol, 1,6-Hexandiol, 1,10-Decandiol, 1,12-Dodecandiol, 3-Methyl-1,5-pentandiol, 3-Methyl-1,3-propandiol, 1,2-Propandiol, 2,2-Dimethyl-1,3-propandiol, 1,3-Propandiol oder Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren wie ω-Hydroxycapronsäure oder Polymerisationsprodukte von Lactonen, z.B. gegebenenfalls substituierten ω-Caprolactonen. Als Polyester-Diole vorzugsweise verwendet werden Ethandiol-polyadipate, 1,4-Butandiolpolyadipate, Ethandiol-1,4-butandiolpolyadipate, 1,6-Hexandiol-neopentylglykolpolyadipate, 1,6-Hexandiol-1,4-butandiolpolyadipate und Polycaprolactone. Die Polyester-Diole besitzen zahlenmittlere Molekulargewichte M̅ₙvon 600 bis 6000 und können einzeln oder in Form von Mischungen untereinander zur Anwendung kommen.

Die relativen Mengen der zerewitinoffaktiven Verbindungen werden bevorzugt so gewählt, dass das Verhältnis der Summe der Isocyanatgruppen aus a) zu der Summe der zerewitinoffaktiven Wasserstoffatome aus b)+c)+g) 0,9:1 bis 1,1:1 beträgt.

Weitere Zusätze, die in das TPU eingearbeitet werden können, sind Thermoplaste, beispielsweise Polycarbonate und Acrylnitril/Butadien/Styrol-Terpolymere, insbesondere ABS. Auch andere Elastomere wie Kautschuk, Ethylen/Vinylacetatcopolymere, Styrol/Butadiencopolymere sowie andere TPU können verwendet werden.

Geeignete erfindungsgemäße Katalysatoren d) sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen-, Zinn-, Zirkon- und Wismuthverbindungen. Die Gesamtmenge an Katalysatoren beträgt in der Regel etwa 0 bis 5 Gew.-%, bevorzugt 0 bis 2 Gew.-%, bezogen auf die Gesamtmenge an TPU.

Die erfindungsgemäßen, thermoplastischen Polyurethanelastomere enthalten Licht-Stabilisatoren e) und ggf. Hilfs- und Zusatzstoffe f). Typische Hilfs- und Zusatzstoffe sind Gleitmittel und Entformungsmittel, wie Fettsäureester, deren Metallseifen, Fettsäureamide, Fettsäureesteramide und Siliconverbindungen, Antiblockmittel, Weichmacher, Inhibitoren, Stabilisatoren gegen Hydrolyse, Hitze und Verfärbung, Farbstoffe, Pigmente, anorganische und/oder organische Füllstoffe, fungistatisch und bakteriostatisch wirkende Substanzen sowie Füllstoffe und deren Mischungen.

Nähere Angaben über die genannten Lichtstabilisatoren und Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 , dem Taschenbuch für Kunststoff-Additive von R.Gächter u. H.Müller (Hanser Verlag München 1990) oder der DE-A 29 01 774 zu entnehmen.

Die Zugabe der Lichtstabilisatoren e) und Hilfs- und Zusatzstoffe f) kann während des Herstellprozesses und/oder bei einer zusätzlichen Compoundierung erfolgen. Um anschließend eine sinterfähige Formmasse zu bekommen, wird das TPU unter Einfluss von flüssigem Stickstoff feingemahlen. Das sinterfähige Produkt hat dabei eine mittlere Teilchengrößenverteilung von 50 bis 800 µm.

Gegenüber Isocyanaten monofunktionelle Verbindungen g) können in Anteilen bis zu 2 Gew.-%, bezogen auf TPU, als sogenannte Kettenabbrecher eingesetzt werden. Geeignet sind z.B. Monoamine wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Die erfindungsgemäßen thermoplastischen Polyurethane werden zur Herstellung von wärmebeständigen, lichtstabilen Formteilen eingesetzt, wobei diese Formteile vorzugsweise im Automobilinnenraum Anwendung finden.

Die Erfindung soll anhand der nachfolgenden Beispiele näher erläutert werden.

Im Folgenden verwendete Abkürzungen:
- PE 225B: Polyesterdiol mit einem Molekulargewicht von Mₙ = 2250 g/mol; Produkt der Firma Bayer MaterialScience AG
- Acclaim® 2220N: Polyether (C-3/C-2 Mischether) mit einem Molekulargewicht von Mₙ = 2000 g/mol; Produkt der Firma Bayer MaterialScience AG
- HDI: 1,6-Hexamethylendiisocyanat
- HDO: 1,6-Hexandiol
- EG: 1,2-Ethandiol
- PDO: 1,5-Pentandiol
- CHDM: 1,4-Cyclohexandimethanol
- HQEE: 1,4-Bis-(2-Hydroxyethoxy)-Benzol
- Irganox® 1010: Antioxidant der Firma Ciba Specialty Chemicals Inc.
- Tinuvin® 622: HALS-Stabilisator der Firma Ciba Specialty Chemicals Inc.
- Tinuvin® 234: Licht-Stabilisator auf Basis eines Benzotriazoles der Firma Ciba Specialty Chemicals Inc.
- Licowax C: Trennmittel der Firma Clariant GmbH
- Elftex 435: Farbruss von der Firma Cabot Corp.
- DBTL: Dibutylzinndilaurat
- Cap-HDO: Kettenverlängerer aus ε-Caprolacton und 1,6-Hexandiol
- Ad-HDO: Kettenverlängerer aus Adipinsäure und 1,6-Hexandiol
- Cap-HQEE: Kettenverlängerer aus ε-Caprolacton und 1,4-Bis-(2-Hydroxy-ethoxy)-benzol

### Beispiele

### Herstellung der Kettenverlängerer:

### Kettenverlängerer aus ε-Caprolacton und 1,6-Hexandiol (Cap-HDO):

2702 g (23,7 Mol) ε-Caprolacton, 2797 g (23,7 Mol) 1,6-Hexandiol und 110 mg Dibutylzinndilaurat (DBTL) wurden unter Stickstoff in einem Vierhalskolben vorgelegt und innerhalb von 2 Stunden unter Rühren langsam auf 200°C erwärmt. Nach 20 Stunden bestimmte man stündlich den Brechungsindex der Schmelze. Die Reaktion war nach 23 Stunden beendet. (Der 22 Stunden- und der 23-Stunden-Brechungsindexwert unterschieden sich um weniger als 0,001).

Die Säurezahl (0,1 mg KOH/g), die Hydroxylzahl (481,6 mg KOH/g) und die Viskosität (190 mPas (25°C) wurden bestimmt.

### Kettenverlängerer aus ε-Caprolacton und HQEE (Cap-HOEE):

2702 g (23,7 Mol) ε-Caprolacton, 4698 g (23,7 Mol) HQEE und 148 mg Dibutylzinndilaurat (DBTL) wurden unter Stickstoff in einem Vierhalskolben vorgelegt und in 2 Std. unter Rühren langsam auf 200°C erwärmt. Nach einer Reaktionszeit von 20 Std. war die Reaktion beendet. Eine Brechungsindexbestimmung war aufgrund eines Schmelzpunktes von ~80°C nicht möglich. Die Säurezahl (0,2 mg KOH/g) und die Hydroxylzahl (360,4 mg KOH/g) wurden bestimmt.

### Kettenverlängerer aus Adipinsäure und 1,6-Hexandiol (Ad-HDO):

7021 g 1,6-Hexandiol (59,5 Mol), 1241 g (8,5 Mol) Adipinsäure und 100 mg Zinndichloriddihydrat wurden unter Stickstoff in einem Vierhalskolben vorgelegt und in 2 Stunden unter Rühren langsam auf 200°C unter Wasserabspaltung erwärmt. Nach 20 Stunden lag die Säurezahl bei 1,5 mg KOH/g. Die Reaktion wurde unter Anlegen eines Vakuums (300 mbar) beendet. Die Säurezahl lag bei 0,2 mg KOH/g. 2 kg 1,6-Hexandiol wurden bei 15 mbar und 180°C innerhalb von 90 Minuten abdestilliert.

Das so erhaltene Produkt wurde anschließend einer Kurzwegverdampfung bei einer Manteltemperatur von 200°C und einem Vakuum von 0,2 mbar unterworfen, wobei das 1,6-Hexandiol weitestgehend entfernt wurde. Man erhielt 2000 g eines bei Raumtemperatur flüssigen, nicht kristallierenden Produktes mit einer OH-Zahl von 267,5 mg KOH/g, einer Säurezahl von 0,1 mg KOH/g und einer Viskosität von 30 mPas (75°C).

### Allgemeine Beschreibung der Herstellung des TPU:

Ein Gemisch aus PE225B, Acclaim^{®} 2220N und Kettenverlängerer mit 0,5 % Irganox^{®} 1010 und 40 ppm DBTL (bezogen auf die Polyolmenge) wurde unter Rühren auf 130°C erwärmt. Danach wurde HDI zugegeben. Anschließend wurde bis zum maximal möglichen Viskositätsanstieg gerührt und das TPU ausgegossen. Das Material wurde 30 min bei 80°C thermisch nachbehandelt und anschließend granuliert. Die genauen Rezepturen mit den Mengenangaben sind der Tabelle 1 zu entnehmen.

### Extrusion:

Zu dem gemäß der allgemeinen Beschreibung hergestellten TPU-Granulat wurden Tinuvin^{®} 234, Tinuvin^{®} 622, Licowax C (jeweils in einer Menge von 0,5 Gew.-%) und 2 Gew.-% Elftex 435 zugegeben und auf einem Extruder des Typs DSE 25, 4 Z, 360 Nm mit folgendem Aufbau:
1. kalte Einzugszone mit Förderelementen,
2. erste Heizzone (165°C) mit 1.Knetzone,
3. zweite Heizzone (175°C) mit Förderelemente und zweiter Knetzone,
4. dritte Heizzone (180°C) mit Knetzone, Förderelemente und Vakuumentgasung,
5. Umlenkkopf (185°C) und Düse (180°C),
mit einer Förderleistung von 10 kg/h bei einer Drehzahl von 220 U/min extrudiert und anschlie-ßend mit einem Strang-Granulator zu Granulat verarbeitet.

### Kaltmahlen:

Das Mahlen des compoundierten Granulats erfolgte mit einer Mühle der Firma Netzsch-Condux, Typ CUM100 mit einer Mahlfrequenz von 21000 U/min. Das Granulat wurde dabei unter Einfluss von flüssigem Stickstoff gekühlt und gleichmäßig in die Mühle eingegeben. Das Pulver wurde anschließend im Trockenschrank getrocknet (2 Stunden, 90°C). Die mittlere Partikelgrößenverteilung betrug dabei 50 bis 800 µm.

### Slushen:

Das getrocknete Pulver wurde in einen schwenkbaren Pulverkasten eingefüllt. Eine auf 240°C vorgeheizte genarbte Metallplatte aus Nickel wurde auf den Pulverkasten geklemmt und einige Male geschwenkt, damit das Pulver auf die heiße Platte aufgesintert wurde. Anschließend wurde die Platte mit dem aufgesinterten TPU eine Minute bei 240°C im Ofen nachgetempert. Die Platte wurde gekühlt. Die genarbte TPU-Haut wurde von der Platte entformt.

### Bestimmung der Wärmestabilität:

Die Wärmestabilität wurde durch Lagerung der geslushten Haut im Umlufttrockenschrank bei 110°C (mit +/- 2°C Toleranz) über eine Zeitspanne von 1000 Stunden ermittelt. Nach der Lagerung wurde qualitativ überprüft, ob das Material ein Anschmelzen (z.B. auf der Oberfläche) zeigt.

### Bestimmung der technischen Verarbeitbarkeit:

Es wurde das Entformungsverhalten (Abziehen der Haut von der Platte und Verformung der Haut während des Entformungsprozesses) qualitativ beurteilt.

### DSC-Messung:

Die DSC (Differential Scanning Calorimetry) stellt eine effektive Methode dar, um Glas- und Schmelzpunkte sowie zugehörige Wärmekapazitäten oder Umwandlungsenthalpien zu detektieren und zu quantifizieren.

DSC-Thermogramme werden aufgenommen, indem man ein Aluminiumpfännchen, das 5-30 mg einer Probe (Granulat oder Pulver) enthält, und ein leeres Referenzaluminiumpfännchen mit der gleichen konstanten Geschwindigkeit aufheizt. Treten infolge von z.B. endothermen Umwandlungen in der Probe Temperaturdifferenzen zur Referenz auf, muss dem Probepfännchen kurzfristig mehr Wärme zugeführt werden. Diese Wärmeflussdifferenz ist das auswertbare Signal.

Detaillierter beschrieben ist die DSC z.B. im "Textbook of Polymer Science" von Fred W. Billmeyer, Jr., 3rd Edition, eine Wiley-Interscience Publication.

Die hier aufgeführten DSC wurden mit einem DSC 7 der Firma Perkin Elmer durchgeführt. Hierzu wurden 5-30 mg Granulat in das Probepfännchen gegeben, die Probe auf-70°C abgekühlt und für eine Minute gehalten. Dann wurde mit einer Heizrate von 20°C pro Minute bis auf 260°C aufgeheizt. Der im Folgenden angegebene Schmelzpunkt ist jeweils das Maximum des auftretenden Schmelzpeaks.

### Bestimmung des Ausblühverhaltens:

Zur Bestimmung des Ausblühverhaltens wurden 4 Testbedingungen gewählt, den die Slush-Häute unterworfen wurden. Die Häute wurden anschließend qualitativ auf Belagsbildung untersucht. Die Testbedingungen waren die Folgenden:
1. Lagerung bei Raumtemperatur über eine Zeitspanne von 4 Wochen
2. Lagerung bei 30°C in destilliertem Wasser über eine Zeitspanne von 4 Wochen
3. Lagerung bei 40°C in destilliertem Wasser über eine Zeitspanne von 4 Wochen
4. Lagerung bei 60°C im Trockenschrank bei einer relativen Luftfeuchtigkeit von 95% über eine Zeitspanne von 4 Wochen.

Die Ergebnisse der Untersuchungen sind der Tabelle 2 zu entnehmen.

In den Vergleichsbeispielen 1 bis 4 wurden nicht erfindungsgemäße TPU mit HDO, EG, CHDM bzw. PDO als Kettenverlängerer eingesetzt. Die technische Verarbeitbarkeit in den Beispielen 1 und 2 und die Wärmestabilität sind zwar ausreichend, aber es entstand vor allein bei der Wasserlagerung (beschleunigter Test für das Ausblühverhalten in der Praxis) zu viel Belag auf den Proben. In den Beispielen 3 und 4 ist die Verarbeitbarkeit schlecht. Die Häute verzogen sich beim Entformen.

Die Produkte aus den erfindungsgemäßen Beispielen 5 bis 8 erfüllen alle Anforderungen im Hinblick auf die Verarbeitbarkeit, Wärmestabilität und dem Ausbleiben einer Belagsbildung.

Im Vergleichsbeispiel 9 war die Menge an Cap-HDO in der Komponente b) zu niedrig. Dies führte zu Problemen im Ausblühverhalten.

Die erfindungsgemäßen Produkte aus den Beispielen 10-12 erfüllen alle Anforderungen zur vollsten Zufriedenheit.

**Tabelle1: Rezepturen**

| **Beispiel** | | **PE 225 [g]** | **Acclaim 2220N [g]** | **Kettenverlängerer** | **Menge [g]** | **Kettenver-längerer** | **Menge [g]** | **HDI [g]** |
|---|---|---|---|---|---|---|---|---|
| **1** | Vergleich | 368 | 160 | HDO | 68 | kein | 0 | 134 |
| **2** | Vergleich | 359 | 160 | EG | 37 | Kein | 0 | 134 |
| **3** | Vergleich | 578 | 257 | CHDM | 271 | Kein | 0 | 373 |
| **4** | Vergleich | 749 | 331 | PDO | 123 | Kein | 0 | 273 |
| **5** | Erfindungsgemäß | 473 | 202 | Cap-HDO | 442 | Kein | 0 | 364 |
| **6** | Erfindungsgemäß | 286 | 126 | Cap-HDO | 119(76%) | HDO | 18,8(24%) | 141 |
| **7** | Erfindungsgemäß | 296 | 131 | Cap-HDO | 92(60%) | HDO | 31(40%) | 140 |
| **8** | Erfindungsgemäß | 299 | 132 | Cap-HDO | 78(50%) | HDO | 39(50%) | 142 |
| **9** | Vergleich | 338 | 149 | Cap-HDO | 35(29%) | HDO | 44(71%) | 123 |
| **10** | Erfindungsgemäß | 368 | 158 | Cap-HDO | 111 (58%) | HQEE | 68(42%) | 175 |
| **11** | Erfindungsgemäß | 274 | 121 | Ad-HDO | 128(50%) | HDO | 36(50%) | 130 |
| **12** | Erfindungsgemäß | 290 | 122 | Cap-HQEE | 161 | Kein | 0 | 117 |
| **13** | Vergleich | 349 | 150 | HDO | 52,5(80%) | BDO | 10,0(20%) | 132 |

Die in Klammern stehenden %-Angaben sind Mol-%, bezogen auf die gesamte Kettenverlängerermenge b)

**Tabelle 2:Ergebnisse**

| **Beispiel** | **Art des Beispiels** | **Wärme stabilität** | **Technische Verarbeit barkeit** | **Tm (DSC) [°C]** | **Tc (DSC) [°C]** | **Ausblühen RT** | **Ausblühen 30°C in Wasser** | **Ausblühen 40°C in Wasser** | **Ausblühen 60°C mit 95% rel. Luftfeuchte** |
|---|---|---|---|---|---|---|---|---|---|
| **1** | Vergleich | gut | gut | 145 | 91 | Kein Belag | Viel Belag | Viel Belag | Kein Belag |
| **2** | Vergleich | gut | gut | 129 | 75 | Kein Belag | Viel Belag | Viel Belag | Kein Belag |
| **3** | Vergleich | gut | Schlecht | 163 | 89 | Kein Belag | Viel Belag | Viel Belag | Kein Belag |
| **4** | Vergleich | gut | schlecht | 131 | 80 | Kein Belag | Viel Belag | Viel Belag | Kein Belag |
| **5** | Erfindungsgemäß | gut | gut | 117 | 62 | Kein Belag | Kein Belag | Kein Belag | Kein Belag |
| **6** | Erfindungsgemäß | gut | gut | 124 | 74 | Kein Belag | Kein Belag | Kein Belag | Kein Belag |
| **7** | Erfindungsgemäß | gut | gut | 130 | 80 | Kein Belag | Kein Belag | Kein Belag | Kein Belag |
| **8** | Erfindungsgemäß | gut | gut | 135 | 85 | Kein Belag | Kein Belag | Kein Belag | Kein Belag |
| **9** | Vergleich | gut | gut | 136 | 86 | Kein Belag | Viel Belag | Viel Belag | Kein Belag |
| **10** | Erfindungsgemäß | gut | gut | 155 | 85 | Kein Belag | Kein Belag | Kein Belag | Kein Belag |
| **11** | Erfindungsgemäß | gut | gut | 123 | 62 | Kein Belag | Kein Belag | Kein Belag | Kein Belag |
| **12** | Erfindungsgemäß | gut | gut | 161 | 93 | Kein Belag | Kein Belag | Kein Belag | Kein Belag |
| **13** | Vergleich | gut | gut | 133 | 76 | Kein Belag | Viel Belag | Viel Belag | Kein Belag |

| | | | | | | | | | |
|---|---|---|---|---|---|---|---|---|---|
| Tm (DSC): Schmelztemperatur Tc (DSC): Rekristallisationstemperatur | | | | | | | | | |

## Patentansprüche

1. Lichtstabile, sinterfähige, thermoplastische Polyurethane erhältlich aus
a) einer Isocyanatkomponente bestehend aus
a1) 100 bis 70 Mol-% 1,6-Hexamethylendiisocyanat und
a2) 0 bis 30 Mol-% eines aliphatischen Diisocyanates oder Gemische von aliphatischen und/oder cycloaliphatischen Diisocyanaten ausgenommen 1,6-Hexamethylendiisocyanat
b) einer Kettenverlängerungskomponente bestehend aus
b1) 100 bis 40 Mol-% mindestens eines Kettenverlängerers mit einem zahlenmittleren Molekulargewicht zwischen 104 und 500 g/mol aus der Gruppe bestehend aus Verbindungen der Formel (I) und (II) 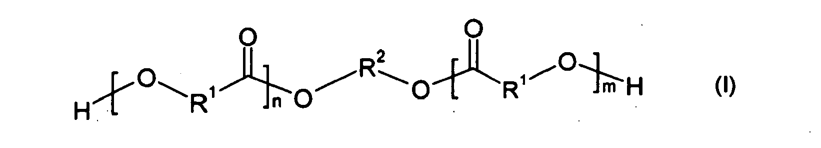 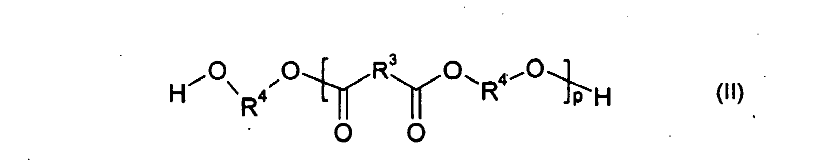 mit
R¹ verzweigte oder unverzweigte Alkylenreste mit 1 bis 12 C-Atomen oder substituierte oder nicht-substituierte Alkarylenreste mit 6 bis 24 C-Atomen,
R², R⁴ verzweigte oder unverzweigte Alkylenreste oder Alkoxyalkylenreste mit 1 bis 12 C-Atomen oder substituierte oder nicht-substituierte Alkarylenreste oder substituierte oder nicht substituierte Alkoxyarylenreste mit 6 bis 24 C-Atomen,
R³ verzweigte oder unverzweigte Alkylenreste mit 1 bis 8 C-Atomen,
n, m 0 bis 10, wobei n+m≥1, und
p 1 bis 10,
b2) 0 bis 60 Mol% eines Kettenverlängerers oder eines Gemisches aus Kettenverlängerern mit einem zahlenmittleren Molekulargewicht von 60 bis 400 g/mol, wobei der Kettenverlängerer b2) nicht identisch mit dem Kettenverlängerer b1) ist, und
c) mindestens einer Polyolkomponente mit einem zahlenmittleren Molekulargewicht von 600 bis 6000 g/mol, in Gegenwart von
d) gegebenenfalls Katalysatoren, unter Zusatz von
e) 0,1 bis 5 Gew.%, bezogen auf thermoplastisches Polyurethan an LichtStabilisatoren,
f) gegebenenfalls weiteren Zusatzmitteln und/oder Hilfsstoffen und
g) gegebenenfalls Kettenabbrechern,
wobei das Verhältnis der Isocyanatgruppen aus a) zu den gegenüber Isocyanat reaktiven Gruppen aus b), c) und g) 0,9:1 bis 1,1:1 beträgt.

2. Wärmebeständiges, lichtstabiles Formteil aus thermoplastischen Polyurethanen gemäß Anspruch 1.

3. Verwendung des thermoplastischen Polyurethans gemäß Anspruch 1 zur Herstellung von Formteilen für Anwendungen im Automobilinnenraum.

## Claims

1. Light-stable, sinterable, thermoplastic polyurethanes obtainable from
a) an isocyanate component consisting of
a1) 100 to 70 mole % of 1,6-hexamethylene diisocyanate and
a2) 0 to 30 mole % of an aliphatic diisocyanate or mixtures of aliphatic and/or cycloaliphatic diisocyanates, with the exception of 1,6-hexamethylene diisocyanate
b) a chain extender component consisting of
b1) 100 to 40 mole % of at least one chain extender with a number average molecular weight between 104 and 500 g/mol from the group consisting of compounds of the formulae (I) and (II) 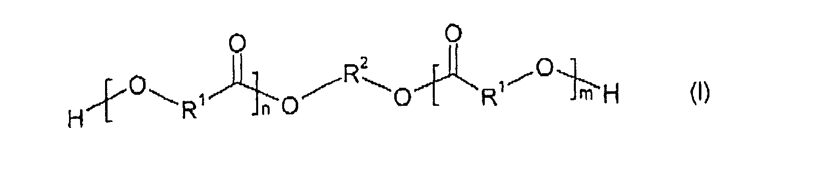 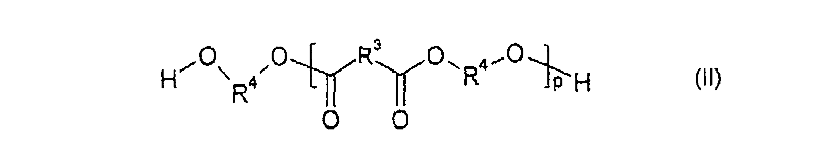 where
R¹ denotes branched or unbranched alkylene radicals with 1 to 12 C atoms or substituted or unsubstituted alkarylene radicals with 6 to 24 C atoms,
R², R⁴ denote branched or unbranched alkylene radicals or alkoxyalkylene radicals with 1 to 12 C atoms or substituted or unsubstituted alkarylene radicals or substituted or unsubstituted alkoxyarylene radicals with 6 to 24 C atoms,
R³ denotes branched or unbranched alkylene radicals with 1 to 8 C atoms,
n, m are 0 to 10, where n + m ≥ 1, and
p is 1 to 10,
b2) 0 to 60 mole % of a chain extender or a mixture of chain extenders with a number average molecular weight of 60 to 400 g/mol, wherein the chain extender b2) is not identical to the chain extender b1), and
c) at least one polyol component with a number average molecular weight of 600 to 6000 g/mol,
in the presence of
d) optionally catalysts, with the addition of
e) 0.1 to 5 wt.%, based on thermoplastic polyurethane, of light stabilisers,
f) optionally further additives and/or auxiliary substances and
g) optionally chain terminators,
wherein the ratio of the isocyanate groups from a) to the groups from b) and c) and g) reactive with regard to isocyanate is 0.9:1 to 1.1:1.

2. Thermally stable, light-stable moulded part of thermoplastic polyurethanes according to claim 1.

3. Use of the thermoplastic polyurethane according to claim 1 for the production of moulded parts for applications in automobile interiors.

## Revendications

1. Polyuréthanes thermoplastiques, aptes au frittage, stables à la lumière obtenus à partir
a) d'un constituant isocyanate constitué
a1) de 100 à 70 % en mole de diisocyanate de 1,6-hexaméthylène et
a2) de 0 à 30 % en mole d'un diisocyanate aliphatique ou de mélanges de diisocyanates aliphatiques et/ou cycloaliphatiques à l'exception du diisocyanate de 1,6-hexaméthylène,
b) d'un constituant d'allongement de chaîne constitué
b1) de 100 à 40 % en mole d'au moins un agent d'allongement de chaîne avec un poids moléculaire moyen en nombre de 104 à 500 g/mol choisi parmi des composés de la formule (I) et (II) 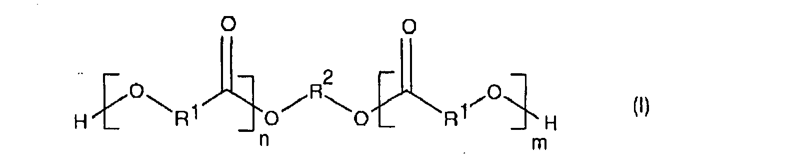 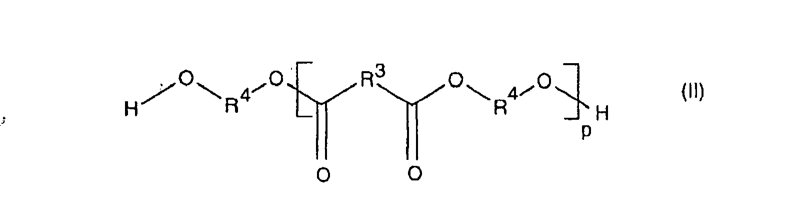 avec
R¹ des restes alkylène ramifiés ou non ramifiés avec de 1 à 12 atomes C ou des restes alcarylène substitués ou non substitués avec de 6 à 24 atomes C,
R², R⁴ des restes alkylène ou des restes alcoxyalkylène ramifiés ou non ramifiés avec de 1 à 12 atomes C ou des restes alcarylène substitués ou non substitués ou
R³ des restes alcoxyarylène substitués ou non substitués avec de 6 à 24 atomes C, des restes alkylène ramifiés ou non ramifiés avec de 1 à 8 atomes C,
n, m de 0 à 10, où n+m ≥ 1, et
p de 1 à 10,
b2) de 0 à 60 % en mole d'un agent d'allongement de chaîne ou d'un mélange d'agents d'allongement de chaîne avec un poids moléculaire moyen en nombre de 60 à 400 g/mol, où l'agent d'allongement de chaîne b2) n'est pas identique à l'agent d'allongement de chaîne b1), et
c) au moins d'un constituant polyol avec un poids moléculaire moyen en nombre de 600 à 6 000 g/mol,
en présence
d) éventuellement de catalyseurs, avec l'addition
e) de 0,1 à 5 % en poids, rapporté au polyuréthane thermoplastique, de stabilisateurs à la lumière,
f) éventuellement d'autres additifs et/ou auxiliaires et
g) éventuellement d'agents d'interruption de chaîne,
le rapport des groupes isocyanate de a) aux groupes réactifs par rapport à l'isocyanate de b), c) et g) étant de 0,9 : 1 à 1,1 : 1.

2. Pièce moulée résistante à la chaleur, stable à la lumière constituée de polyuréthanes thermoplastiques selon la revendication 1.

3. Utilisation du polyuréthane thermoplastique selon la revendication 1 pour la préparation de pièces moulées destinées à des applications dans l'espace intérieur de véhicules automobiles.
